# EUROPEAN PATENT APPLICATION

(11) **EP 2 717 372 A1**
(43) Date of publication of application: **09.04.2014**
(21) Application number: 12792765.5
(22) Date of filing: 17.05.2012
(51) Int. Cl.: H01M 8/18

(54) **HYDROGEN STORAGE LIQUID ORGANIC MATERIAL-BASED DIRECT FUEL CELL AND SYSTEM FOR ENERGY STORAGE AND ENERGY SUPPLY**

(30) Priority: 27.05.2011 CN 201110139186; 27.05.2011 CN 201110139197; 27.05.2011 CN 201110139173
(71) Applicant: China University of Geosciences (Wu Han ), Hongshan District Wuhan Hubei 430074 (CN)
(72) Inventor: CHENG, Hansong, Wuhan Hubei 430074 (CN); NI, Gang, Wuhan Hubei 430074 (CN); YANG, Ming, Wuhan Hubei 430074 (CN); HAN, Chaoqun, Wuhan Hubei 430074 (CN); HAN, Bo, Wuhan Hubei 430074 (CN); WANG, Shengping, Wuhan Hubei 430074 (CN); WU, Jinping, Wuhan Hubei 430074 (CN)
(74) Representative: Decamps, Alain René François
(86) International application number: PCT/CN2012/075628
(87) International publication number: WO 2012/163227

(57) **Abstract**

This invention belongs to hydrogen utilization technologies in the field of clean energy and new energy. A direct Fuel Cell is based on organic liquid hydrogen storage materials. It includes a fuel cell unit which connected to load through AC/DC convert circuit; it features: the outlet of hydrogen storage materials on the fuel cell unit is connected to hydrogen storage tank through hydrogen storage output pipe. The inlet of hydrogenated hydrogen storage materials on the fuel cell unit is connected to hydrogenated hydrogen storage materials tank through the input pipe of hydrogenated hydrogen storage materials. There is a pump for hydrogenated hydrogen storage materials on the hydrogenated hydrogen storage materials input pipe; the second outlet for water and gas on the fuel cell unit is connected to water tank through the second water output pipe. The water and gas inlet on the fuel cell unit is connected with oxygen input pipe; there is a gas outlet on the top of the water tank; the hydrogen storage materials tank contains hydrogen storage materials. The mentioned hydrogen storage materials are a multi-component mixture of liquid unsaturated heterocyclic aromatics.

## Description

### Field of Invention

This invention belongs to hydrogen energy utilization technology in the field of clean energy and new energy. Specifically, it is an optimized energy utilization technology based on core concepts of hydrogen storage and transformations between hydrogen energy and electric energy. That is: electric energy storage will be realized in the processes of electrochemical hydrogenation on certain hydrogen storage materials which can be reversible between hydrogenation and dehydrogenation, and hydrogen energy stored in hydrogen storage materials will be converted to electric energy in direct fuel cell. In particular, it relates to direct fuel cell and energy storage and energy supply system based on organic liquid hydrogen storage materials.

### Background of the Invention

Energy is the foundation for the survival and development of modem society, which has penetrated into every corner of the production and living of human being. Currently, energy used in human society is mainly from fossil fuels. However, the existing ways in using energy has many problems, such as the inefficient use, environmental pollution from greenhouse gas produced by fuel burning. In addition, after the chemical energy in fossil fuel has been converted into electrical energy, there is a time discontinuous in the process of using it by human. There may be "peak" and "valley" in this process, which is highly demanding for the energy storage devices. As traditional fossil fuels depletion and growing demanding for environmental protection, today's governments have been paying more and more attention on developing new clean energy. However, among many new energy sources, there is a very significant instability in solar energy, wind energy and others, which prevents them from well merging into the existing grid system and also needs high-performance energy storage facilities. Hydrogen energy, as a new secondary energy of high energy density, clean and harmless, provides a possible solution for the above problems. Therefore, it has been widely appreciated all over the world and hydrogen economy concept emerged.

The use of hydrogen in the hydrogen economy will permeate all aspects of economic life. Hydrogen-based energy systems include many aspects like hydrogen production, storage, transportation, transformation and application.

Conventional hydrogen production technologies include the methods of steam reforming of hydrocarbons, heavy oil (or residual) partial oxidation reforming, electrolysis of water. Currently, new methods of hydrogen production, such as the bio-hydrogen production, are gaining international attention, and it is anticipated that, in the mid-21st century, their industrial hydrogen production will be realized. Hydrogen productions from the use of agricultural and industrial by-products have also being developed. In addition, the use of other methods of producing hydrogen from water splitting has also been widely appreciated, such as the use of solar energy, geothermal energy, and thermochemical cycle of nuclear energy.

Hydrogen storage issues relate to hydrogen production, transportation, and all other aspects of the final application. Currently, the hydrogen storage mainly has three methods: high-pressure gaseous storage, cryogenic liquid hydrogen storage and hydrogen-storage materials. High-pressure and low-temperature hydrogen storage, requiring too much consumption of energy, is not suitable for large-scale commercial use. Currently, more research works on hydrogen storage materials go into physical absorption type materials and chemical absorption type materials. Among them, organic liquid hydrogen storage materials exist in liquid state at room temperature and can be accommodated in the existing infrastructure for fossil fuel storage and transportation. At the same time, they have large capacity of hydrogen storage. So, they have been greatly gained attention.

There are mainly two forms of transformation of hydrogen for application. It can be in the form of combustion in the engine, or it can be in the form of chemical reaction in fuel cell. In the combustion reaction of the fuel in fuel cell, chemical energy is directly converted into electric energy, rather than going through Carnot engine, which has higher energy conversion efficiency. Fuel cells with hydrogen as energy carrier can be classified as five main types, namely: alkaline electrolyte fuel cell (AFC), proton exchange membrane fuel cell (PEM-FC), phosphoric acid fuel cell (PAFC), molten carbonates fuel cell (MCFC) and solid oxide fuel cells (SOFC), whose main differences are their electrolytes and operating temperatures. Among fuel cells with small organic molecules as the fuel, direct-methanol fuel cells are mostly studied. However, using aromatic molecules as the fuel has not been reported.

As the existing hydrogen utilization system still cannot solve many problems in the existing energy using patterns, we developed novel new hydrogen -based fuel cells coupled system. The system can be used to achieve mutual conversion of electric energy and hydrogen energy, and energy storage and supply with lower installation costs relative to the existing use of hydrogen energy. At the same time, the fuel used by the whole system can be recycled without pollution, environment-friendly. It can be used in vehicle power system and fixed power stations.

The system is divided into two parts: in part of the energy storage, electric energy will be converted into hydrogen energy; in the part of energy supply, hydrogen energy will be converted into electricity energy. The system works as follows:

Electrolytic hydrogenation reactions: aromatic molecules + H₂O → hydrogenated aromatic molecules + O₂ (1)

Discharge reactions in dehydrogenation: hydrogenated aromatic molecules + O₂ → aromatic molecules + H₂O (2)

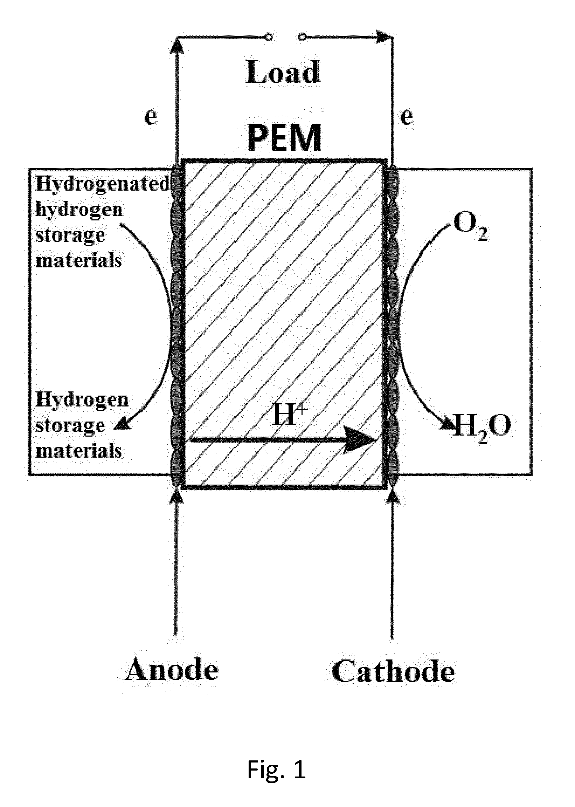

Wherein the electrolytic hydrogenation reaction (1) is by the direct hydrogenation of organic molecules containing unsaturated bonds through the electrolysis of water. The principle can be described in Figure 1, indicating that the anode and cathode of the electrolytic cell are water molecules and aromatic molecules. When water is electrolyzed, the cathode water is decomposed into oxygen and protons, and the protons diffuse to the cathode through the electrolyte, forming absorptive hydrogen atoms which react directly with aromatic molecules to hydrogenate the aromatic molecules. So, electric energy is converted to hydrogen energy which is stored in the hydrogenated aromatic molecules.

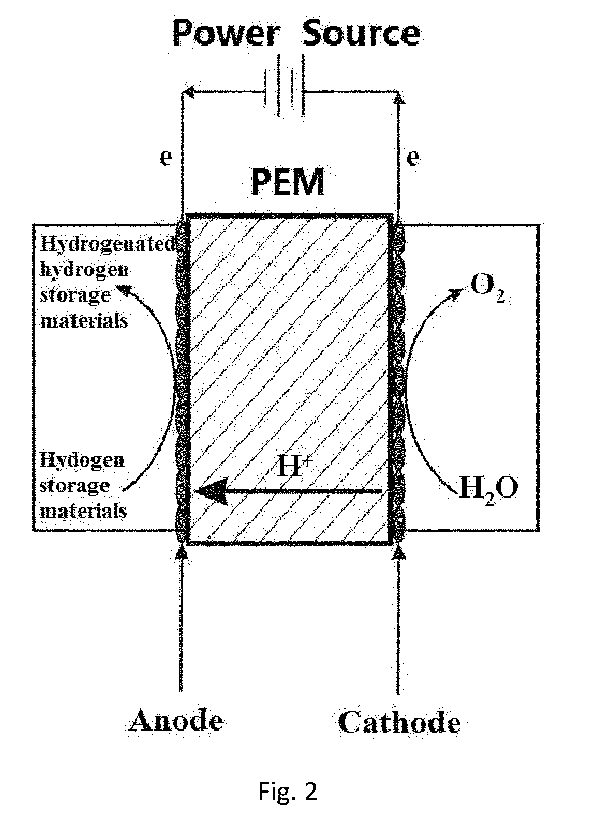

Regarding the above mentioned discharge reaction in dehydrogenation (2), its principle is shown in Figure 2, indicating that discharging of the hydrogenated aromatic molecules directly occurs at the anode from their dehydrogenation in an incomplete oxidation, forming aromatic molecules and protons. These protons diffuse through the electrolyte to the cathode, on which they react with oxygen to produce electric current and form water molecules. Therefore, the hydrogen energy stored in the hydrogenated aromatic molecules is converted into electric energy. It is easy to be seen that the reaction product, aromatic molecules can be dehydrogenated again in the reaction (1), resulting in a recycle use of these molecules. The aromatic molecules and the hydrogenated aromatic molecule act in roles of hydrogen storage materials and directly providing source of hydrogen, respectively. Therefore, we can see that the battery based on the reaction (2) is a direct fuel cell of the recyclable hydrogenated hydrogen storage materials. For simplicity, we refer it as R- direct Fuel Cell (Reversible- direct fuel cells), to distinguish with the existing direct fuel cells with complete oxidation of organic materials.

Regarding the direct fuel cells with complete oxidation of the fuel, they are mainly the fuel cells of small alcohol molecules. Their battery products, CO₂ and H₂O, come from complete oxidation of the alcohols, which are difficult to reversely be electrolyzed back to the alcohols to store electric energy as chemical energy. As a result, it can't be used for "peak-cutting and valley-filling" of intermittent renewable electric energy. The above mentioned R- direct fuel cell based on the cell reaction (2) in this invention has never been reported.

The electrochemical catalytic hydrogenation of unsaturated organic molecules in the above mentioned cell reaction (1) has been investigated in 1980s. For examples, Karivmiller *et al* in 1986, 1988 studied the electrochemically reductive hydrogenation of phenanthrene, anthracene on cathode in aqueous solutions (Karivmiller, E. and RI Pacut, 1986, Tetrahedron 42 (8): 2185-2192. /Karivmiller, E., RI Pacut, et all.,1988, Topics in Current Chemistry 148:97-130.); Pintauro *et al* validated in 1991 the effectiveness of the electrochemical hydrogenation for benzene and other aromatic compounds in the Raney nickel electrode (Pintauro, PN & JR Bontha,1991, Journal of Applied Electrochemistry 21 (9): 799-804.); Jiang, J. H, *et al* in 2006, using the AB5 type alloy materials carrying hydrogen as catalytic electrode materials, also studied on the behavior of nitrobenzene in the electrochemical hydrogenation of (Jiang, JH and B L. Wu, 2006, Journal of Applied Electrochemistry 36 (7): 733-738.). These studies focused on the basic research of the electrochemical hydrogenation of unsaturated molecules. They were not on the targets of the conversion of electrical energy to hydrogen and storage of hydrogen for facilitating the dehydrogenation and discharging. Therefore, the choice of the type of aromatic molecules, their physical status, dehydrogenation temperature conditions and their energy consumption etc., in the present invention are significantly different from the above reported molecules studied studies. It will be analyzed and described in the following discussion.

1) the molecule must be *non*-volatile liquids, rather than solids, at the operating temperature (<150 °C). Although some solids can be dissolved in a solvent, solvents will reduce their concentration in the electrode surface. So, solids such as Philippines anthracene, and volatile liquid such as Benzene will not work as the working medium;

2) the temperature for dehydrogenation on hydrogenated molecules should not be too high. For example, the dehydrogenation temperature is higher than 300 °Cfor cyclohexane seen as the hydrogenated molecule of benzene. It has far exceeded the cell operating temperature, not suitable for the working medium; also, if the temperature of the dehydrogenation/hydrogenation is high, severe cell anode polarization will occur and result in increasing the energy loss in discharging upon dehydrogenation. If the dehydrogenation temperature is high, small aromatic molecules like benzene would be inappropriate for the working medium. Another example is that unstable molecules like vinyl alcohol would also not be used as the working medium.

The system can realize the mutual transformation of hydrogen and electrical energy, wherein the R- direct fuel cells can be used alone for vehicle power system, suitable for mobile transportation; while the coupling of the two can be used as energy storage devices, suitable for "load shifting "of grid system, as well as for solar, wind and other intermittent clean energy to be into grid.

### DETAILED DESCRIPTION

The object of the present invention is to provide a new type of direct fuel cell based on organic liquid hydrogen storage materials; and the energy storage-supply system using this direct fuel cell, which comprises of an energy storage-supply system of a parallel and integrated direct fuel cell based on liquid -based hydrogen storage materials. The system mainly consists of an energy storage device and an energy supply device. The energy storage device fulfills the conversion of electric energy to hydrogen energy. The energy supply device fulfills the conversion of hydrogen energy to electric energy. This system features simple structure. The mentioned energy supply device is the direct fuel cell based on organic liquid hydrogen storage materials[R-fuel cell based on organic liquid hydrogen storage materials].

To achieve the above object, the present invention is adopted technical solutions: a direct Fuel Cell (also known as R- direct fuel cells) based on organic liquid hydrogen storage materials. It includes a fuel cell unit which connected to load through AC/DC convert circuit; it features: the outlet (25) of hydrogen storage materials on the fuel cell unit (16) is connected to hydrogen storage tank (35) through hydrogen storage output pipe (27). The inlet (32) of hydrogenated hydrogen storage materials on the fuel cell unit (16) is connected to hydrogenated hydrogen storage materials tank (29) through the input pipe (33) of hydrogenated hydrogen storage materials. There is a pump for hydrogenated hydrogen storage materials on the hydrogenated hydrogen storage materials input pipe (37); the second outlet for water and gas on the fuel cell unit (16) is connected to water tank (20) through the second water output pipe. The water and gas inlet (31) on the fuel cell unit is connected with oxygen input pipe; there is a gas outlet (21) on the top of the water tank (20); the hydrogen storage materials tank (35) contains hydrogen storage materials. This mentioned hydrogen storage materials is multi-component mixture of liquid unsaturated heterocyclic aromatics.

Fuel cell can be achieved by the following electrochemical reaction:

Hydrogenated aromatic molecules + O₂ → Aromatic Molecules + H₂O (1)

The principle of the above discharging dehydrogenation reaction (1) is shown in Figure 1, the hydrogenated goes on an incomplete oxidation of discharging dehydrogenation directly on the anode of the fuel cell, forming aromatic molecules and protons. The protons diffuse to the cathode via the electrolyte and react with oxygen to produce water molecules. Therefore, the hydrogen energy stored in the hydrogenated aromatic molecules is directly converted to electric energy, without going through the process of releasing hydrogen. The main products are aromatic molecules and water. The aromatic molecules can be hydrogenated again. The aromatic molecules and their hydrogenated molecules play the roles of hydrogen storage materials and providing hydrogen source, respectively. It's easy to see that the cell constructed from reaction (1) is a direct fuel cell of recyclable hydrogenated hydrogen storage materials.

The energy storage device and its working principle is the reverse process of energy supply unit, and its implementation devices are the same as the energy supply devices, excerpt the working order is opposite to it. That is, when the energy supply devices are R-direct fuel cells, energy storage devices are electrolytic hydrogenation devices; when energy supply devices are hydrogen-oxygen fuel cells, energy storage devices are hydrogen production devices from water.

Coupling the above mentioned energy devices and energy supply devices will form an integrated system of energy storage and energy supply based on liquid hydrogen storage. Its structure is simple and it can be used widely. In this integrated system, when organic liquid hydrogen storage materials are used for the working medium, the energy supply devices are R-direct fuel cells and the energy storage devices are electrolytic hydrogenation devices. The implementations include: integrated and parallel.

Parallel: An energy storage and energy supply system with parallel direct fuel cells based on liquid hydrogen storage materials, which includes a fuel cell unit (16) and electrolytic hydrogenation device unit (17). It features: water inlet (22) on the electrolytic hydrogenation device unit (17) is connected to one end of water input pipe (19). The other end of the water input pipe (19) is connected to the bottom of the water tank (20). There is a water pump (18) on the water input pipe (19); the first outlet (24) of water and gas on the electrolytic hydrogenation device unit (17) is linked with water tank (20) through the first water output pipe (23). There is a gas outlet (21) on the water tank; the inlet (13) for hydrogen storage materials on the electrolytic hydrogenation device unit (17) is connected to the bottom of the hydrogen storage materials tank (35) through the inlet (37) for hydrogen storage materials. There is a hydrogen storage materials pump (36) on the hydrogen storage materials input pipe (37); the hydrogenated hydrogen storage materials outlet (14) on the electrolytic hydrogenation device unit (17) is connected to the hydrogenated hydrogen storage materials tank (29) through the hydrogenated hydrogen storage materials output pipe (26); the hydrogen storage materials outlet (25) on the fuel cell unit (16) is connected to the hydrogen storage materials tank (35) through the hydrogen storage materials output pipe (27). The hydrogenated hydrogen storage materials inlet (32) is connected to the hydrogenated hydrogen storage materials tank (29) through the hydrogenated hydrogen storage materials input pipe (33). There is a hydrogenated hydrogen storage materials pump (34) on hydrogenated hydrogen storage materials input pipe (33); the second outlet (28) for water and gas on the fuel cell unit (16) is connected to water tank (20) through the second water output pipe (30). The inlet (31) for water and gas on the fuel cell unit (16) is connected to oxygen input pipe; the hydrogen storage materials tank is filled with hydrogen storage materials, which are multi-component mixture of liquid unsaturated heterocyclic aromatics.

Integrated: An energy storage and energy supply system with integrated direct fuel cells based on liquid hydrogen storage materials, which includes a fuel cell unit (16) and electrolytic hydrogenation device unit (17). The fuel cell is connected to generator and load through the AC / DC converter circuit, respectively. It features: the structure of electrochemical hydrogenation unit is the same as of the fuel cell unit. Electrolytic hydrogenation device unit and fuel cell are merged into a one unit. The anode of the fuel cell unit shares with the cathode of the electrochemical hydrogenation unit. The cathode of the fuel cell unit shares with the anode of the electrochemical hydrogenation unit; the second outlet (28) for water and gas on the fuel cell unit 16 is connected to the water tank (20) through the second water output pipe (30). There is a gas outlet (21) (exhausting port) on the water tank (20); One end of the first water input pipe (41) is connected to the bottom of the water tank (20) and the other end of the first water input pipe (41) is connected to the first port of the first three-way valve (42). There is a water pump (18) on the first water input pipe (41); the second port of the three way valve is connected to the inlet (31) for water and gas on the fuel cell unit (16). The third port of the three-way valve (42) is connected to the oxygen pipe (43); the hydrogenated hydrogen storage materials inlet (32) on the fuel cell unit (16) is connected to the first port of the second three-way valve (49) through the first working medium pipe (46). The second port of the second three-way valve (49) is connected to the bottom of the hydrogenated hydrogen storage materials tank (29). The third port of the second three-way valve (49) is connected to the bottom of the hydrogen storage materials tank (35); the hydrogen storage materials outlet (25) on the fuel cell unit (16) is connected to the first port of the third three-way valve (52) through the fifth working medium pipe (53). The second port of the third three-way valve (52) is connected to the hydrogenated hydrogen storage materials tank (29) through the fourth working medium pipe (51). The third port of the third three-way valve (52) is connected to the hydrogen storage materials tank (35) through the third working medium pipe (50); the mentioned hydrogen storage materials tank (35) is filled with hydrogen storage materials, which are multi-component mixture of liquid unsaturated heterocyclic aromatics.

The mentioned working medium is hydrogen storage materials.

The mentioned multi-component mixture of liquid unsaturated heterocyclic aromatics is specifically any one or mixture of two or more than two types of liquid unsaturated heterocyclic aromatic molecules (such as : Carbazole , N- methyl carbazole , N-ethyl carbazole , indole, quinoline , etc.). The above mixture of any two or more will be in any arbitrary ratio.

The heterocyclic rings in the mentioned liquid unsaturated heterocyclic aromatic molecules may contain hetero-atoms in all or some of these rings; the total number of the hetero-atoms ranges from 1 to 20; the total number of the heterocyclic rings and aromatic rings ranges from 1 to 20; the number of the carbon atoms in any one ring of the liquid unsaturated heterocyclic aromatics ranges from 4 to 10.

The mentioned hetero-atoms in heterocyclic rings can be any one or more of atoms of nitrogen, oxygen, sulfur, etc.

The mentioned liquid unsaturated heterocyclic aromatic molecules are carbazole , N- methyl carbazole , N-ethyl carbazole , indole or quinolinemorpholine, etc.

Working medium: the hydrogen storage materials of the present invention (i.e., the working medium) are multi-component mixture of liquid unsaturated heterocyclic aromatics (1 to 20 rings) containing hetero-atoms like nitrogen, oxygen, sulfur etc. in the rings. The liquid hydrogen storage materials consist of mixture of fused heterocyclic / aromatic compounds with different side groups in the aromatic rings. When the number of the rings in the fused heteroaryl / aromatic compounds is less than 8, the existing state is monomer organic molecule; when the ring number is 8 to 15, the form is oligomers; when the ring number exceeds 15, the form is conjugated polymers. Studies have shown that fused aromatics with more rings, their hydrogenated molecules will have lower temperature for dehydrogenation and the corresponding energy consumption is lower. However, the melting point will be higher. In addition, if the aromatic rings contain hetero-atoms, the dehydrogenation temperature for hydrogenated fused aromatic molecules will be further reduced, but the melting point will be further increased. If the multi-component mixture of liquid unsaturated heterocyclic aromatics is used as hydrogen storage materials, coupling the electrolytic cell of the above direct electrolytic hydrogenation reactions (1) with the R- direct fuel of the discharge reactions in dehydrogenation (2) will result in an integrated system of energy storage and supply. The system's working medium (the multi-component mixture of liquid unsaturated heterocyclic aromatics) can be recyclable, zero emission, environmentally friendly, with no restriction from regions and environments. Therefore, it can fulfill the urgent needs for the "load shifting" in variant power supply systems. In the present invention, the multi-component mixture of liquid unsaturated heterocyclic aromatics can be applied for reversible hydrogen storage and release within temperature from 50 to 280 °C and the hydrogen storage capacity of up to 8.0wt% can be achieved.

The principles of the invention:

### (a) Direct electrochemical hydrogenation electrolytic cell

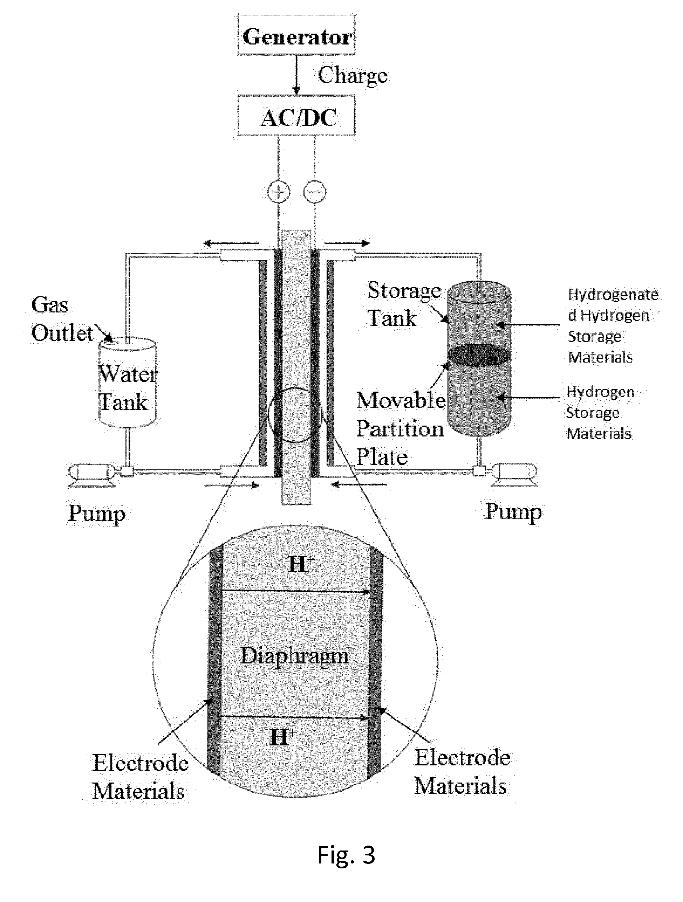

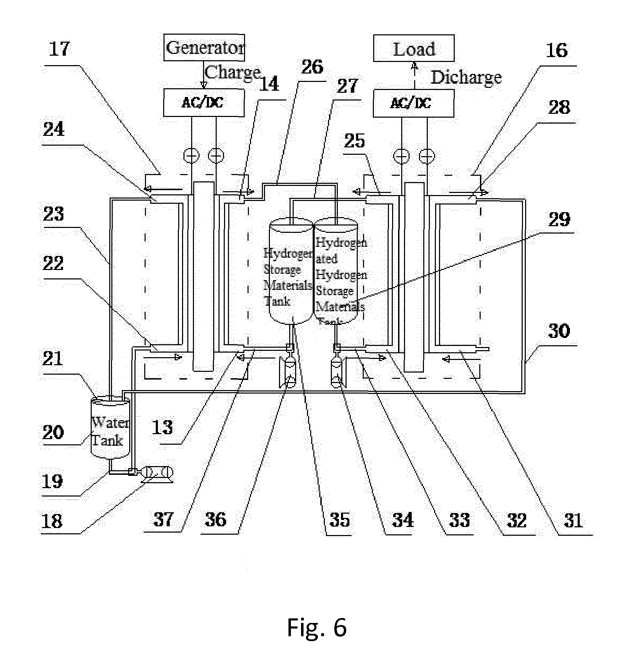

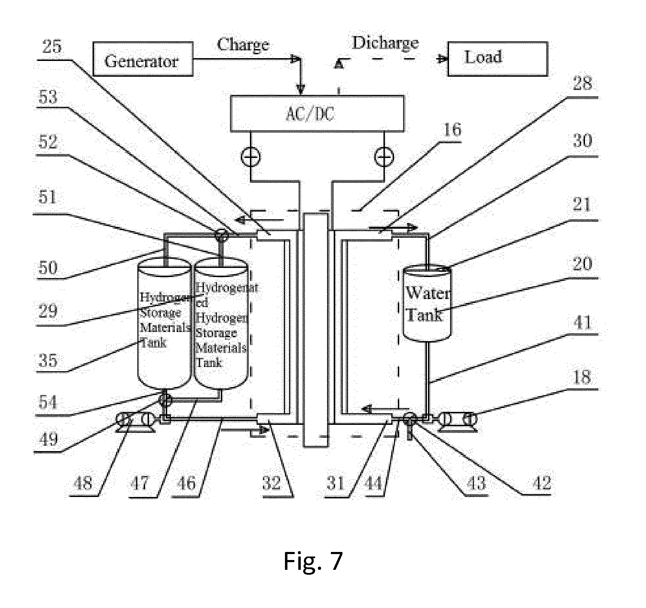

The principle of the direct electrochemical electrolytic cell of the hydrogenated hydrogen storage materials is shown in Figure 1, the electrolytic cell reaction is: hydrogen storage materials molecules + H₂O → hydrogenated hydrogen storage materials molecules + O₂. Electrolytic cell device structure is shown in Figure 3. When the electrolytic cell is in operation, the hydrogen storage materials tank (tank is separated by a movable partition plate into a hydrogen storage materials tank and a hydrogenated hydrogen storage materials tank), the hydrogen storage materials are pumped into the cell cathode. Water on the anode is electrolyzed into oxygen and protons. The protons diffuse through the electrolyte to the cathode and are reduced to form adsorbed hydrogen atoms, which will react directly with the organic liquid hydrogen storage materials, hydrogen storage timber directly to the organic liquid, resulting in oxidation of the unsaturated heteroaryl/aromatic hydrogen storage materials. The hydrogenated molecules enter into the hydrogenated hydrogen storage materials tank. The system can be constructed in a form of stacks of membrane electrode stack. Each unit of the stack will include flow field plate, seals, membrane electrode (as shown in Figure 6, Figure 7).

### (b) R- direct fuel cell

R- direct fuel cell is a new type of direct fuel cell shown in Figure 2. The cell reaction is: Hydrogenated hydrogen storage materials molecules + O₂ → hydrogen storage materials molecules + H₂O. The structure of the cell device is shown in Figure 4. When the fuel cell is in operation, the hydrogenated hydrogen storage materials in the hydrogenated hydrogen storage materials tank (tank is separated by a movable partition plate into a hydrogen storage materials tank and a hydrogenated hydrogen storage materials tank) are pumped into the cell anode and discharge dehydrogenation directly on the anode occurs, producing hydrogen storage materials molecules and protons. The hydrogen storage materials molecules will flow into the hydrogen storage materials tank and the protons diffuse through the electrolyte into the cathode and react with oxygen to form water molecules. The system can be constructed in a form of stacks of membrane electrode stack. Each unit of the stack will include flow field plate, seals, membrane electrode (as shown in Figure 6, Figure 7).

R-direct fuel cell is shown in Figure 1. The cell device structure is shown in Figure 2. The system can be constructed in a form of stacks of membrane electrode stack. Each unit of the stack will include flow field plate, seals, membrane electrode (as shown in Figure 6, Figure 7).

The direct fuel cell reaction and direct electrochemical hydrogenation are inverse process, namely: when fuel reaction occurs, the system discharges out, hydrogen energy converts into electricity; in case of power input, the electrochemical hydrogenation reaction occurs and electrical energy is converted into hydrogen energy storage. Therefore, an integrated system of non-polluting, zero emission energy storage and supply can be established.

### Advantageous Effects of Invention

### Advantageous Effects

The present invention has the following advantages: the electrolytic hydrogenation cells and R- direct fuel cells in the above direct fuel cell energy storage/supply system based on liquid hydrogen storage materials can o also function as an independent system, particularly wherein R-Direct Fuel cells can be directly used in mobile transportation. As a vehicle driving force, compared to existing vehicle fuel cell systems, the system can be greatly simplified. It has a characteristic of simple structure. Without a need to release hydrogen in advance, it will be not only simplified for the apparatus, but also it will be substantially raised in safety. Meanwhile, because the R- direct fuel in the external circuit breaker does not automatically result in a waste of dehydrogenation when the external circuit is in an open state, it is convenient to adjust the number of the fuel cell units in the stack to change the output power of the battery for accommodation of the need from electric vehicles to change speed randomly. In an addition, hydrogen, oxygen, water in the system can be recycled.

### BRIEF DESCRIPTION OF THE DRAWINGS

### BRIEF DESCRIPTION

Figure 1 is a schematic on the electrochemical hydrogenation.
Figure 2 is a schematic on the direct fuel cell.
Figure 3 is a schematic on the electrolytic cell for the electrochemical hydrogenation.

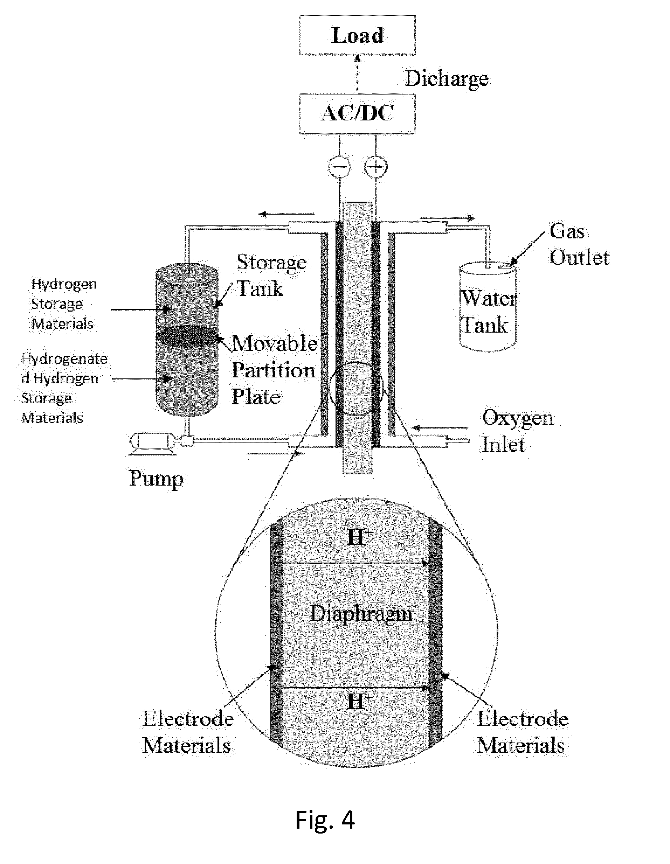

Figure 4 is a schematic on R- direct fuel cell.

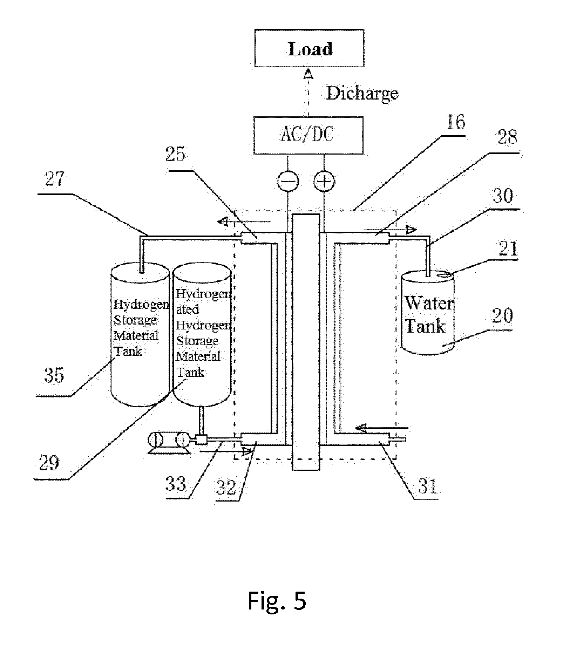

Figure 5 is a schematic on the R-direct fuel cell.
Figure 6 is a schematic on the parallel direct fuel cell energy storage/supply system based on liquid hydrogen storage materials.
Figure 7 a schematic on the integrated direct fuel cell energy storage/supply system based on liquid hydrogen storage materials.

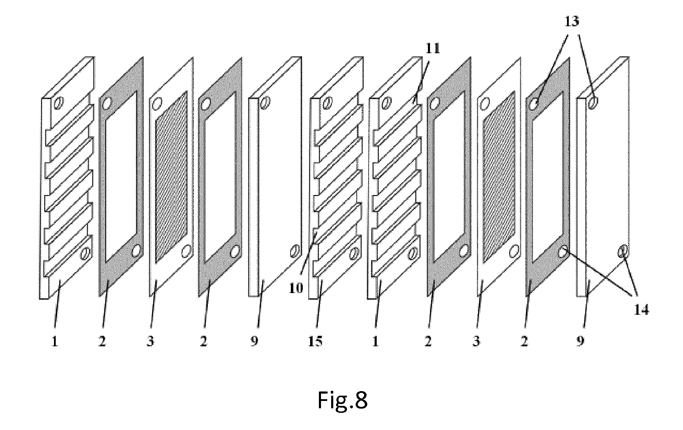

Figure 8 is a schematic of the cell stack.

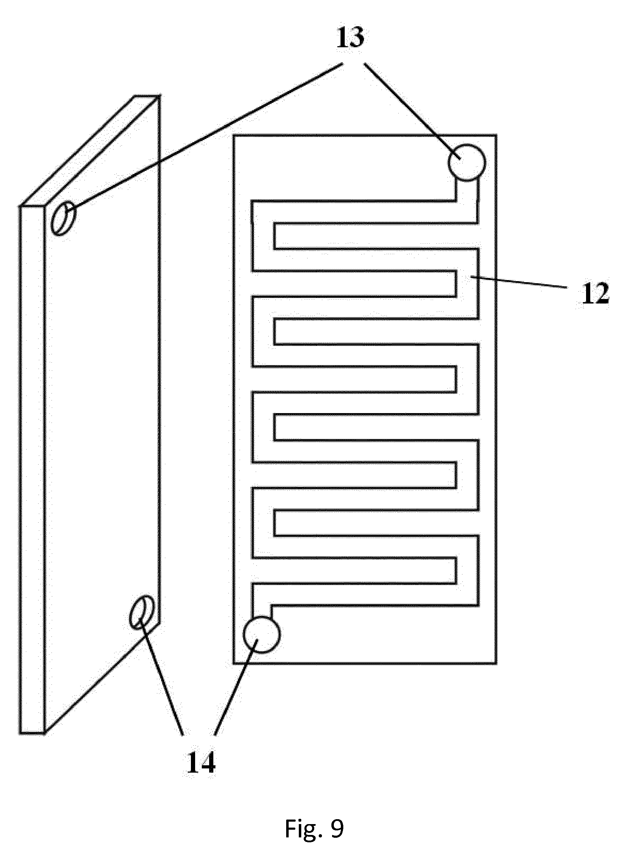

Figure 9 is a left side view of the liquid flow field plate.

Reference numeral: (1) gas flow field plate; (2) seals; (3) membrane electrode; (9) the liquid flow field plate; (10) air flow path; (11) air and water path; (12) liquid path; (13) hydrogen storage materials inlet [working medium (hydrogen materials) entrance]; (14) hydrogenated hydrogen storage materials outlet [working medium (hydrogenated hydrogen storage materials) exit]; (15) air cooling unit; (16) fuel cell unit; (17) unit of the electrochemical hydrogenation apparatus; (18) water pump; (19) water input pipe; (20) water tank; (21) gas outlet [vent]; (22) water outlet; (23) the first water outlet; (24) the first water and gas outlet; (25) hydrogen storage materials outlet [working medium outlet]; (26) hydrogenated hydrogen storage materials output pipe; (27) hydrogen storage materials output pipe; (28) the second water and gas outlet; (29) hydrogenated hydrogen storage materials tank; (30) the second water output pipe; (31) water and gas inlet (gas inlet); (32) hydrogenated hydrogen storage materials inlet; (33) hydrogen storage materials input pipe; (34) hydrogen storage materials pump; (35) hydrogen storage materials tank; (36) hydrogen storage materials pump; (37) hydrogen storage materials input pipe; (41) the first water input pipe; (42) the first three-way valve; (43) oxygen pipe; (44) the second water inlet; (46) the first working medium pipe; (47) second working medium pipe; (48) work medium pump; (49) the second three-way valve; (50) the third working medium pipe; (51) the fourth working medium pipe; (52) the third three-way valve; (53) the fifth working medium pipe; (54) the sixth working medium pipe.

### EMBODIMENT OF THE PRESENT INVENTION

### Example 1:

As shown in Figure 5, a direct fuel cell based on organic liquid hydrogen storage materials (or the so-called R- direct fuel cell), which includes a fuel cell unit (16), connected to loads via AC/DC converter circuit; the outlet (25) of hydrogen storage materials on the fuel cell unit (16) is connected to hydrogen storage tank (35) through hydrogen storage output pipe (27). The inlet (32) of hydrogenated hydrogen storage materials on the fuel cell unit (16) is connected to hydrogenated hydrogen storage materials tank (29) through the input pipe (33) of hydrogenated hydrogen storage materials. There is a pump for hydrogenated hydrogen storage materials on the hydrogenated hydrogen storage materials input pipe (37); the second outlet for water and gas on the fuel cell unit (16) is connected to water tank (20) through the second water output pipe. The water and gas inlet (31) on the fuel cell unit is connected with oxygen input pipe; there is a gas outlet (21) on the top of the water tank (20); the hydrogen storage materials tank (35) contains hydrogen storage materials. The mentioned hydrogen storage materials is a multi-component mixture of liquid unsaturated heterocyclic aromatics. The multi-component mixture of liquid unsaturated heterocyclic aromatics is specifically quinoline hydrogen storage materials, and the hydrogen storage capacity is 6.2wt%.

As shown in Fig. 3, the direct fuel cell based on organic liquid hydrogen storage materials can be formed in sequentially superposition of the fuel cell unit (16) (the structure of the fuel cell unit (16) is the conventional structure). The structure of every one of the fuel cell is the same, which includes (1) liquid flow field plate; (9) membrane electrode and (2) seal. The fuel cell unit (16) has the hydrogen storage materials outlet (25) and hydrogenated hydrogen storage materials inlet (32); the gas flow field plate has an air and water path (11); the liquid flow field plate (9) has a liquid flow (12) (as shown in Figure 8, Figure 9).

### Example 2:

The same as in Example 1, except that: the mentioned multi-component mixture of liquid unsaturated heterocyclic aromatics is the binary mixture of quinolinequinoline and N-ethyl carbazole, the mass ratio of the two components is quinoline : N- ethyl carbazole = 5:3, and the hydrogen storage capacity is 5.2wt%.

### Example 3:

The same manner as Example 1, except that : the mentioned multi-component mixture of liquid unsaturated heterocyclic aromatics is the ternary mixture of hydrogen storage materials of N-methyl carbazole , quinoline , and N- ethyl carbazole, the mass ratio of the three components is N-methyl carbazole : quinoline : N- ethyl- carbazole = 1:4:3 , the hydrogen storage capacity is 5.7wt%.

### Example 4:

The same as Example 1, except that: the mentioned multi-component mixture of liquid unsaturated heterocyclic aromatics is the quaternary mixture of hydrogen storage materials of carbazolyl , N- methyl carbazole , N-ethyl carbazole and quinoline, the mass ratio of the four components is carbazole : N- methyl- carbazole : N- ethyl carbazole : quinoline = 1:2:4: 1, the hydrogen storage capacity is 5.8wt%.

### Example 5:

The same as in Example 1, except that: the mentioned multi-component mixture of liquid unsaturated heterocyclic aromatics is the quaternary mixture of hydrogen storage materials of carbazolyl, N- methyl carbazole, N-ethyl carbazole and quinolinequinoline, the mass ratio of the four components is carbazole volume ratio of: N- methyl- carbazole : N- ethyl carbazole : quinoline = 2:1:3:5 , the hydrogen storage capacity is 5.4wt%.

### Example 6:

As shown in Figure 6, a parallel type direct fuel cell energy storage/supply system based on the liquid hydrogen storage materials, which includes the fuel cell unit (16) and the electrochemical hydrogenation apparatus unit (17); water inlet (22) on the electrolytic hydrogenation device unit (17) is connected to one end of water input pipe (19). The other end of the water input pipe (19) is connected to the bottom of the water tank (20). There is a water pump (18) on the water input pipe (19); the first outlet (24) of water and gas on the electrolytic hydrogenation device unit (17) is linked with water tank (20) through the first water output pipe (23). There is a gas outlet (21) on the water tank; the inlet (13) for hydrogen storage materials on the electrolytic hydrogenation device unit (17) is connected to the bottom of the hydrogen storage materials tank (35) through the inlet (37) for hydrogen storage materials. There is a hydrogen storage materials pump (36) on the hydrogen storage materials input pipe (37); the hydrogenated hydrogen storage materials outlet (14) on the electrolytic hydrogenation device unit (17) is connected to the hydrogenated hydrogen storage materials tank (29) through the hydrogenated hydrogen storage materials output pipe (26); the hydrogen storage materials outlet (25) on the fuel cell unit (16) is connected to the hydrogen storage materials tank (35) through the hydrogen storage materials output pipe (27). The hydrogenated hydrogen storage materials inlet (32) is connected to the hydrogenated hydrogen storage materials tank (29) through the hydrogenated hydrogen storage materials input pipe (33). There is a hydrogenated hydrogen storage materials pump (34) on hydrogenated hydrogen storage materials input pipe (33); the second outlet (28) for water and gas on the fuel cell unit (16) is connected to water tank (20) through the second water output pipe (30). The inlet (31) for water and gas on the fuel cell unit (16) is connected to oxygen input pipe; the hydrogen storage materials tank is filled with hydrogen storage materials, which are multi-component mixture of liquid unsaturated heterocyclic aromatics. It is specifically quinoline hydrogen storage materials, and the hydrogen storage capacity is 6.2wt%.

As shown in Fig. 3, a parallel direct fuel cell energy storage/supply system based on organic liquid hydrogen storage materials can be formed in sequentially superposition of the fuel cell unit (16) and the electrochemical hydrogenation apparatus unit (17) (the structures of the fuel cell unit (16) and the electrochemical hydrogenation apparatus unit (17) have the conventional structure). The structures of every one of the fuel cell unit and the electrochemical hydrogenation apparatus unit are the same, which includes (1) liquid flow field plate; (9) membrane electrode and (2) seal. However, the membrane electrode (3) in the electrochemical hydrogenation apparatus unit and membrane electrode in the fuel cell unit use different materials. The electrochemical hydrogenation apparatus unit (17) has a hydrogen storage materials inlet (13) and a hydrogenated hydrogen storage materials inlet (14). The fuel cell unit (16) has the hydrogen storage materials outlet (25) and hydrogenated hydrogen storage materials inlet (32); the gas flow field plate has an air and water path (11); the liquid flow field plate (9) has a liquid flow (12) (as shown in Figure 8, Figure 9).

At power peak, the generator supplies power to the system, only the electrochemical hydrogenation apparatus unit (17) will work. Hydrogen storage materials will be pumped out by the hydrogen storage materials pump (36) from the hydrogen storage materials tank (35) to enter the electrochemical hydrogenation apparatus unit (17) via the hydrogen storage materials inlet (13) through the hydrogen storage materials input pipe (37). They will arrive at the cathode surface and result in hydrogenation reaction. The product will be hydrogenated hydrogen storage materials, which will flow out from the hydrogenated hydrogen storage materials outlet (14) and enter and be stored into the hydrogenated hydrogen storage materials tank (29) via the hydrogenated hydrogen storage materials output pipe (26). Water will flow out from the water tank (20), pumped by water pump (18), and enter the electrochemical hydrogenation apparatus unit (17) through water inlet (22) via water input pipe (19), and decomposing reaction will occur at the anode surface, resulting in product of oxygen, which will flow out from the first water and gas outlet (24) and enter the water tank (20) via the first water output pipe (23), then ventilate out through the gas vent hole (21) at the top of the water tank.

When electricity is in low valley, the system will provides power to outside load. Only the fuel cell unit (16) is operated in the system. Hydrogenated hydrogen storage materials will be pumped out by hydrogenated hydrogen storage materials pump (34) from the hydrogenated hydrogen storage materials tank (29) to enter the fuel cell unit (16) via the hydrogenated hydrogen storage materials inlet (32) through the hydrogenated hydrogen storage materials input pipe (33). They will arrive at the anode surface and result in dehydrogenation reaction. The product will be hydrogen storage materials, which will flow out from the hydrogen storage materials outlet (25) and enter and be stored into the hydrogen storage materials tank (35) via the hydrogen storage materials output pipe (27). Air will comes via the gas inlet (31) and reacts on the cathode. The product is water, which will flow out via the second water and gas outlet and enter the water tank (20) via the second water output pipe. The air not involving in the reaction will be ventilated from the vent hole on the top of the water tank (20).

### Example 7:

The same as in Example 6, except that: the mentioned multi-component mixture of liquid unsaturated heterocyclic aromatics is the binary mixture of hydrogen storage materials of quinoline and N-ethyl carbazole, the mass ratio of the two components is quinoline: N- ethylcarbazole = 4 : 3 , the hydrogen storage capacity is 6.0 wt%.

### Example 8:

The same as in Example 6, except that: the mentioned multi-component mixture of liquid unsaturated heterocyclic aromatics is the ternary mixture of hydrogen storage materials of N- methyl carbazole , quinoline , and N- ethyl carbazole, the mass ratio of the three components is N- methyl carbazole : quinoline : N- ethyl- carbazole = 2 :3 : 1, the hydrogen storage capacity is 5.7wt%.

### Example 9:

The same as in Example 6 , except that: the mentioned multi-component mixture of liquid unsaturated heterocyclic aromatics is the quaternary mixture of hydrogen storage materials of carbazole , N- methyl carbazole , N-ethyl carbazole and quinoline, the mass ratio of the four components is carbazole : N- methyl- carbazole : N- ethyl carbazole : quinoline = 4:3:2:3, the hydrogen storage capacity is 5.6wt%.

### Example 10:

The same as in Example 6, except that: the mentioned multi-component mixture of liquid unsaturated heterocyclic aromatics is the quaternary mixture of hydrogen storage materials of carbazole , N- methyl carbazole , N-ethyl carbazole and indole, the mass ratio of the four components is carbazole : N- methyl- carbazole : N- ethyl carbazole : indole = 2:6:3:5, the hydrogen storage capacity is 6.5wt%.

### Example 11:

As shown in Figure 7, an energy storage and energy supply system with integrated direct fuel cells based on liquid hydrogen storage materials, which includes a fuel cell unit (16) and electrolytic hydrogenation device unit (17). The fuel cell unit (they are also electrochemical hydrogenation apparatus unit) is connected to generator and load through the AC / DC converter circuit, respectively. The structure of electrochemical hydrogenation unit is the same as of the fuel cell unit. Electrolytic hydrogenation device unit and fuel cell are merged into a one unit. The anode of the fuel cell unit shares with the cathode of the electrochemical hydrogenation unit. The cathode of the fuel cell unit shares with the anode of the electrochemical hydrogenation unit; the second outlet (28) for water and gas on the fuel cell unit (16) is connected to the water tank (20) through the second water output pipe (30). There is a gas outlet (21) (exhausting port) on the water tank (20). One end of the first water input pipe (41) is connected to the bottom of the water tank (20) and the other end of the first water input pipe (41) is connected to the first port of the first three-way valve (42). There is a water pump (18) on the first water input pipe (41); the second port of the three way valve is connected to the inlet (31) for water and gas on the fuel cell unit (16). The third port of the three-way valve (42) is connected to the oxygen pipe (43); the hydrogenated hydrogen storage materials inlet (32) on the fuel cell unit (16) is connected to the first port of the second three-way valve (49) through the first working medium pipe (46). The second port of the second three-way valve (49) is connected to the bottom of the hydrogenated hydrogen storage materials tank (29). The third port of the second three-way valve (49) is connected to the bottom of the hydrogen storage materials tank (35); the hydrogen storage materials outlet (25) on the fuel cell unit (16) is connected to the first port of the third three-way valve (52) through the fifth working medium pipe (53). The second port of the third three-way valve (52) is connected to the hydrogenated hydrogen storage materials tank (29) through the fourth working medium pipe (51). The third port of the third three-way valve (52) is connected to the hydrogen storage materials tank (35) through the third working medium pipe (50); the mentioned hydrogen storage materials tank (35) is filled with hydrogen storage materials, which are multi-component mixture of liquid unsaturated heterocyclic aromatics. It is specifically indole hydrogen storage materials. Its hydrogen storage capacity is 6.4wt%.

An energy storage and energy supply system with integrated direct fuel cells based on liquid hydrogen storage materials (two electrode system) imply that the apparatus of fuel cell and electrochemical hydrogenation will have identical selected electrodes. The anode of the fuel cell unit shares with the cathode of the electrochemical hydrogenation unit. The cathode of the fuel cell unit shares with the anode of the electrochemical hydrogenation unit. The system only needs two types of electrodes, called AB-type structure. The principle of this structure is shown in Fig. 7. The system may use membrane electrode method to form a stack. In the stack, every unit includes flow field plate, seal, and membrane electrode (as shown in Fig. 8 and Fig. 9). The structure of the AB-type system is simple, compact and small in volume.

As shown in Figure 7, the whole fuel cell stack is formed in overlay of the same unit. Each unit comprises a fuel cell gas flow field plate (1), the sealing member (2), the membrane electrode (3), a liquid flow field plate (9); every two fuel cell units will be separated by an air cooling device (15). Since the fuel cell process is completely reversible with electrochemical hydrogenation process, each fuel cell unit is also an electrochemical hydrogenation unit. In the electrochemical hydrogenation process, the fuel cell cathode is the anode of the electrochemical hydrogenation unit; the fuel cell anode is the cathode of the electrochemical hydrogenation unit. On each unit there are the working medium (hydrogen storage materials) inlet (13) and the working medium (hydrogen storage materials) outlet (14), the gas flow field plate (1) has an air and water flow pipe (11), the liquid flow field plate (9) has a liquid flow pipe (12) (as shown in Figure7).

When power is in peak, power is supplied for the system (charging), the electrochemical hydrogenation process occurs. The hydrogen storage materials will be pumped out from the hydrogen storage materials tank (35) to go through hydrogenated hydrogen storage materials inlet (32) (working medium inlet) and liquid flow pipe (12) and arrive at the cathode surface, resulting in hydrogenation reaction (the second working medium pipe (47), the third working medium pipe (50) were blocked, the oxygen pipe is not working). The hydrogen storage materials, after being hydrogenated, will flow out from the hydrogen storage materials outlet (working medium outlet) (25) and arrive at the hydrogenated hydrogen storage materials tank (29); water goes through the gas and water pipe (11) and arrives at the anode surface, resulting in oxygen releasing. When power is in low valley, the system will output power (discharging). Hydrogenated hydrogen storage materials (hydrogen storage materials) will arrive at the anode surface via the hydrogenated hydrogen storage materials inlet (working medium inlet) (32) and liquid pipe (12), and come into dehydrogenation reaction (the sixth working medium pipe (37), the fourth working medium pipe (51), the first water input pipe (41) will be blocked and the water pump is not in operation). The products will enter the hydrogen storage materials tank (35) via the hydrogen storage materials outlet (working medium outlet); Air will go through the gas and water pipe (11), arrive at the cathode surface and take place of reaction. The produced water enters the water tank (20) via pipe.

### Example 12:

The same as in Example 11 , except that : the mentioned multi-component mixture of liquid unsaturated heterocyclic aromatics is the binary mixture of hydrogen storage materials of quinoline and N-ethyl carbazole, the mass ratio of the two components is quinoline: N- ethyl- carbazole = 2:3, the hydrogen storage capacity is 5.3 wt%.

### Example 13:

The same as in Example 11, except that: the mentioned multi-component mixture of liquid unsaturated heterocyclic aromatics is the ternary mixture of hydrogen storage materials of N- methyl carbazole, quinoline, and N- ethyl carbazole, the mass ratio of the three components is N- methyl carbazole : quinoline : N- ethyl- carbazole = 5:3:3, the hydrogen storage capacity is 5.0wt%.

### Example 14:

The same as in Example 11, except that: the mentioned multi-component mixture of liquid unsaturated heterocyclic aromatics is the quaternary mixture of hydrogen storage materials of carbazole, N- methyl carbazole, N-ethyl carbazole and quinoline, the mass ratio of the four components is carbazole : N- methyl- carbazole : N- ethyl carbazole : quinoline = 4:3:5:1, the hydrogen storage capacity is 6.3wt%.

### Example 15:

The same as in Example 11, except that: the mentioned multi-component mixture of liquid unsaturated heterocyclic aromatics is the quaternary mixture of hydrogen storage materials of carbazole, N- methyl carbazole, N-ethyl carbazole and indole, the mass ratio of the four components is carbazole : N- methyl- carbazole : N- ethyl carbazole : indole = 2:7:3:5, the hydrogen storage capacity is 5.9wt%.

The various raw materials in the examples of the present invention from the multi-component mixture of liquid unsaturated heterocyclic aromatics can be used to realize this invention. While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following.

## Claims

1. A direct fuel cell based on mixture of liquid unsaturated heterocyclic aromatic compounds,the fuel cell comprising:
(a) a fuel cell unit,
(b) a hydrogen storage unit,
where the fuel cell unit is connected to load through AC/DC convert circuit; the outlet 25 of hydrogen storage materials on the fuel cell unit 16 is connected to hydrogen storage tank 35 through hydrogen storage output pipe 27. The inlet 32 of hydrogenated hydrogen storage materials on the fuel cell unit 16 is connected to hydrogenated hydrogen storage materials tank 29 through the input pipe 33 of hydrogenated hydrogen storage materials. There is a pump for hydrogenated hydrogen storage materials on the hydrogenated hydrogen storage materials input pipe 37; the second outlet for water and gas on the fuel cell unit 16 is connected to water tank 20 through the second water output pipe. The water and gas inlet 31 on the fuel cell unit is connected with oxygen input pipe; there is a gas outlet 21 on the top of the water tank 20; the hydrogen storage materials tank 35 contains hydrogen storage materials.

2. According to claim 1, wherein the direct fuel cell is based on the organic liquid hydrogen storage materials, **characterized in that**: the mentioned multi-component mixture of liquid unsaturated heterocyclic aromatics are specifically any one or mixture of two or more than two types of liquid unsaturated heterocyclic aromatic molecules. The above mixture of any two or more may be in any arbitrary ratio.

3. According to claim 2, wherein the direct fuel cell is based on the organic liquid hydrogen storage materials, **characterized in that**: the heterocyclic rings in the mentioned liquid unsaturated heterocyclic aromatic molecules may contain hetero-atoms in all or some of these rings; the total number of the hetero-atoms ranges from 1 to 20; the total number of the heterocyclic rings and aromatic rings ranges from 1 to 20; the number of the carbon atoms in any one ring of the liquid unsaturated heterocyclic aromatics ranges from 4 to 10.

4. According to claim 3, wherein the direct fuel cell is based on the organic liquid hydrogen storage materials, **characterized in that**: the mentioned hetero-atoms in heterocyclic rings can be any one or more of atoms of nitrogen, oxygen, sulfur, etc.

5. According to claim 2, wherein the direct fuel cell is based on the organic liquid hydrogen storage materials, **characterized in that**: the mentioned multi-component mixture of liquid unsaturated heterocyclic aromatics is the quaternary mixture of hydrogen storage materials of carbazole, N- methyl carbazole , N-ethyl carbazole, indole or quinolone

6. An energy storage and energy supply system with parallel direct fuel cells based on liquid hydrogen storage materials, which includes a fuel cell unit 16 and electrolytic hydrogenation device unit 17.
It features: water inlet 22 on the electrolytic hydrogenation device unit 17 is connected to one end of water input pipe 19. The other end of the water input pipe 19 is connected to the bottom of the water tank 20. There is a water pump 18 on the water input pipe 19; the first outlet 24 of water and gas on the electrolytic hydrogenation device unit 17 is linked with water tank 20 through the first water output pipe 23. There is a gas outlet 21 on the water tank; the inlet 13 for hydrogen storage materials on the electrolytic hydrogenation device unit 17 is connected to the bottom of the hydrogen storage materials tank 35 through the inlet 37 for hydrogen storage materials. There is a hydrogen storage materials pump 36 on the hydrogen storage materials input pipe 37; the hydrogenated hydrogen storage materials outlet 14 on the electrolytic hydrogenation device unit 17 is connected to the hydrogenated hydrogen storage materials tank 29 through the hydrogenated hydrogen storage materials output pipe 26; the hydrogen storage materials outlet 25 on the fuel cell unit 16 is connected to the hydrogen storage materials tank 35 through the hydrogen storage materials output pipe 27. The hydrogenated hydrogen storage materials inlet 32 is connected to the hydrogenated hydrogen storage materials tank 29 through the hydrogenated hydrogen storage materials input pipe 33. There is a hydrogenated hydrogen storage materials pump 34 on hydrogenated hydrogen storage materials input pipe 33; the second outlet 28 for water and gas on the fuel cell unit 16 is connected to water tank 20 through the second water output pipe 30. The inlet 31 for water and gas on the fuel cell unit 16 in connected to oxygen input pipe; the hydrogen storage materials tank is filled with hydrogen storage materials, which are multi-component mixture of liquid unsaturated heterocyclic aromatics.

7. According to claim 6, wherein the energy storage and energy supply system with parallel direct fuel cells is based on liquid hydrogen storage materials, **characterized in that**: the mentioned multi-component mixture of liquid unsaturated heterocyclic aromatics are specifically any one or mixture of two or more than two types of liquid unsaturated heterocyclic aromatic molecules. The above mixture of any two or more may be in any arbitrary ratio.

8. An energy storage and energy supply system with integrated direct fuel cells is based on liquid hydrogen storage materials, which includes a fuel cell unit 16 and electrolytic hydrogenation device unit 17. The fuel cell is connected to generator and load through the AC / DC converter circuit, respectively. It features: the structure of electrochemical hydrogenation unit is the same as of the fuel cell unit. Electrolytic hydrogenation device unit and fuel cell are merged into a one unit. The anode of the fuel cell unit shares with the cathode of the electrochemical hydrogenation unit. The cathode of the fuel cell unit shares with the anode of the electrochemical hydrogenation unit; the second outlet 28 for water and gas on the fuel cell unit 16 in connected to the water tank 20 through the second water output pipe 30. There is a gas outlet 21 (exhausting port) on the water tank 20; One end of the first water input pipe 41 is connected to the bottom of the water tank 20 and the other end of the first water input pipe 41 is connected to the first port of the first three-way valve 42. There is a water pump 18 on the first water input pipe 41; the second port of the three way valve in connected to the inlet 31 for water and gas on the fuel cell unit 16. The third port of the three-way valve 42 is connected to the oxygen pipe 43; the hydrogenated hydrogen storage materials inlet 32 on the fuel cell unit 16 is connected to the first port of the second three-way valve 49 through the first working medium pipe 46. The second port of the second three-way valve 49 is connected to the bottom of the hydrogenated hydrogen storage materials tank 29. The third port of the second three-way valve 49 is connected to the bottom of the hydrogen storage materials tank 35; the hydrogen storage materials outlet 25 on the fuel cell unit 16 is connected to the first port of the third three-way valve 52 through the fifth working medium pipe 53. The second port of the third three-way valve 52 is connected to the hydrogenated hydrogen storage materials tank 29 through the fourth working medium pipe 51. The third port of the third three-way valve 52 in connected to the hydrogen storage materials tank 35 through the third working medium pipe 50; the mentioned hydrogen storage materials tank 35 is filled with hydrogen storage materials, which are multi-component mixture of liquid unsaturated heterocyclic aromatics.

9. According to Claim 8, wherein the energy storage and energy supply system with integrated direct fuel cells is based on liquid hydrogen storage materials, **characterized in that**: the mentioned multi-component mixture of liquid unsaturated heterocyclic aromatics is specifically any one or mixture of two or more than two types of liquid unsaturated heterocyclic aromatic molecules. The above mixture of any two or more may be in any arbitrary ratio.
